# FASCICULE DE BREVET EUROPEEN

(11) **EP 2 229 997 B1**
(45) Date de publication et mention de la délivrance du brevet: **07.05.2014**
(21) Numéro de dépôt: 10290103.0
(22) Date de dépôt: 03.03.2010
(51) Int. Cl.: B01D 53/14, B01D 53/62, B01D 53/78, C01B 3/52, C01B 31/20, C10L 3/10, F23J 15/04

(54) **Procédé de désacidification d'un gaz par solution absorbante avec vaporisation et/ou purification d'une fraction de la solution absorbante régénérée**
Verfahren zur Entsäuerung eines Gases mit einer Absorptionslösung und/oder Reinigung eines Teils der regenerierten Absorptionslösung
Process for the deacidification of a gas with an absorbing solution and/or purification of a portion of the regenerated absorbing solution

(30) Priorité: 10.03.2009 FR 0901091
(43) Date de publication de la demande: 22.09.2010
(73) Titulaire: IFP Energies nouvelles, 92852 Rueil-Malmaison Cedex (FR)
(72) Inventeur: Bouillon, Pierre-Antoine, 69003 Lyon (FR); Jacquin, Marc, 69002 Lyon (FR)

(56) Documents cités:
- FR-A- 2 898 284
- FR-A- 2 900 843
- US-A- 4 251 494
- US-A1- 2007 148 068
- A.L. KOHL, R.B. NIELSEN: "Gas purification, Fifth edition, Chapter 3 : Mechanical Design and Operation of Alkanolamine Plants" 1 janvier 1997 (1997-01-01), GULF PUBLISHING COMPANY , HOUSTON, TEXAS , XP002550025 * tableaux 3-6 * * page 211 * * pages 255,256 * * page 264 *

## Description

La présente invention concerne le domaine de la désacidification d'un effluent gazeux au moyen d'une solution absorbante.

Le procédé selon l'invention permet de retirer les composés acides tels le dioxyde de carbone (CO₂) et l'hydrogène sulfuré (H₂S) contenus dans un effluent gazeux. Il peut s'appliquer au traitement d'un gaz naturel, d'un gaz de synthèse ou de fumées issues d'un processus de combustion.

Le document US 4,251,494 décrit un procédé pour éliminer des composés acides d'un gaz en utilisant une solution absorbante biphasique. La solution absorbante régénérée est séparée en deux phases qui sont directement renvoyées dans l'absorbeur sans subir d'autre traitement après séparation des deux phases.

Le document FR 2 900 843 décrit un procédé de désacidification d'un gaz, dans lequel le gaz est mis en contact avec une première solution absorbante puis la solution chargée en acide est mise en contact avec une deuxième solution absorbante, ce qui forme deux phases liquides. Aucune de ces phases liquides n'est purifiée ou vaporisée avant d'être réintroduite dans une zone de régénération.

Le document FR 2 898 284 propose de mettre en oeuvre une solution absorbante démixante qui présente la propriété de se fractionner lorsqu'on chauffe ladite solution absorbante chargée en composés acides. La solution absorbante est mise en contact avec le gaz à désacidifier. Lors de la régénération, la solution se sépare en deux phases : une fraction riche en composés acides et une fraction pauvre en composés acides. Ainsi, le document FR 2 898 284 propose de ne régénérer par distillation que la fraction qui est enrichie en composés acides afin de minimiser l'énergie nécessaire à la régénération de la solution absorbante.
Cependant, la régénération thermique de la solution absorbante favorise la dégradation des composés organiques contenus dans la solution absorbante. Les composés organiques se dégradent lors de leur passage dans le rebouilleur qui apporte l'énergie thermique nécessaire à la régénération. Il s'agit de l'endroit du procédé où les conditions opératoires sont les plus sévères. De plus, dans le cas du traitement des fumées de combustion, par exemple de centrales thermiques, la présence d'oxygène peut engendrer d'autres réactions de dégradations. Sous ces effets conjugués, des produits de dégradation organiques et des sels non régénérables s'accumulent au sein de la solution absorbante. Cette accumulation altère les propriétés d'absorption des gaz acides par la solution absorbante. Par ailleurs, les produits de dégradation organiques peuvent avoir une nature tensioactive. Ainsi, ils peuvent poser des problèmes de moussage, ou poser des problèmes de séparation liquide-liquide en stabilisant les phases sous la forme d'une émulsion. Ces problèmes de séparation liquide-liquide peuvent se rencontrer dans le cas de la mise en oeuvre décrite dans le document FR 2 898 284, ou dans le cas du traitement du gaz où les hydrocarbures liquides sont éliminés de la solution absorbante par séparation liquide-liquide, après la colonne d'absorption. De plus, les sels non régénérables sont connus pour être responsables de problèmes de corrosion et de moussage au sein des unités.

Pour limiter ces problèmes, la solution absorbante est généralement purifiée par échange ionique ou par distillation, de manière séquentielle ou continue. Dans le cas d'une purification par échange ionique, on utilise des résines échangeuses d'ions pour remplacer les sels non régénérables, par des hydrogénocarbonates qui sont régénérables. Dans le cas d'une purification par distillation, l'eau et les composés réactifs sont vaporisés et renvoyés dans l'unité de captage, laissant ainsi les produits de dégradation organiques peu volatils et les sels non régénérables s'accumuler au fond du ballon de distillation. Ces derniers sont ensuite éliminés. Par ailleurs, lorsque les composés réactifs sont peu volatils, il peut s'avérer difficile de vaporiser la solution absorbante à pression atmosphérique. On réalise alors une purification de la solution absorbante par distillation sous vide, qui est plus coûteuse qu'une distillation à pression atmosphérique, afin de limiter la température de distillation. Malgré cet abaissement de la température de distillation, des dégradations peuvent encore se produire lors de cette opération de purification. Plus la solution absorbante se dégrade rapidement, plus la fréquence des opérations de purification est élevée pour garantir des performances constantes de la solution absorbante, et une concentration maximale de sels non régénérables au sein de la solution. Ces opérations de purifications ont un impact non négligeable sur les coûts opératoires de l'unité. Enfin, les opérations de purifications par échange ionique ou par distillation ne permettant pas d'éliminer l'ensemble des produits de dégradation organiques, il peut être nécessaire de renouveler périodiquement l'ensemble de la solution absorbante, lorsque ses performances sont trop diminuées. Les coûts associés à l'achat d'une nouvelle charge de solvant et à l'élimination de la charge de solution absorbante dégradée sont élevés.

La présente invention vise à optimiser les opérations réalisées sur la solution absorbante en effectuant une séparation de la solution absorbante régénérée en deux fractions : une fraction enrichie en eau et une fraction enrichie en composés réactifs.

De manière générale, l'invention décrit un procédé de désacidification d'un effluent gazeux comportant au moins un composé acide du groupe constitué par l'hydrogène sulfuré (H₂S) et le dioxyde de carbone (CO₂), dans lequel on effectue les étapes suivantes:
a) on met en contact l'effluent gazeux avec une solution absorbante dans une zone de contact de manière à obtenir un effluent gazeux appauvri en composés acides et une solution absorbante chargée en composés acides, la solution absorbante étant choisie pour sa propriété de former deux fractions liquides séparables lorsqu'elle est chauffée,
b) on régénère la solution absorbante chargée en composés acides dans une zone de régénération de manière à libérer les composés acides sous forme gazeuse et à obtenir une solution absorbante régénérée,
c) on effectue une étape de séparation d'une portion de la solution régénérée en une fraction enrichie en eau et une fraction enrichie en composés réactifs,
d) on effectue au moins l'une des opérations suivantes :
   i) on vaporise au moins une partie de la fraction enrichie en eau pour produire une vapeur qui est introduite dans la zone de régénération,
   ii) on effectue une opération de purification de la fraction enrichie en eau pour produire une fraction purifiée qui est introduite dans la zone de régénération,
   iii) on effectue une opération de purification de la fraction enrichie en composés réactifs pour produire une fraction purifiée qui est introduite dans la zone de régénération.

Selon l'invention, on peut effectuer l'opération i) au moyen d'un rebouilleur.

A l'opération ii) on peut mettre en oeuvre l'une des techniques suivantes : adsorption, échange d'ion, distillation.

A l'opération iii) on peut mettre en oeuvre l'une des techniques suivantes : adsorption, distillation.

Après l'opération i) ou ii), on peut envoyer la fraction enrichie en eau dans la zone de contact ou dans la zone de régénération.

Après l'opération iii), on peut envoyer la fraction enrichie en composés réactifs dans la zone de contact ou dans la zone de régénération.

Avant l'étape b), on peut chauffer la solution absorbante chargée en composés acides, on peut séparer de la solution absorbante un flux appauvri en composés acides et on peut recycler le flux en l'introduisant dans la zone de mise en contact.

La solution absorbante chargée en composés acides peut être chauffée à une température comprise entre 50°C et 150°C.

Une deuxième portion de la solution absorbante régénérée peut être recyclée en étant introduite dans la zone de mise en contact.

A l'étape c), on peut utiliser l'une des techniques de séparation suivantes: décantation, centrifugation, filtration.

La solution absorbante peut comporter un composé réactif en phase aqueuse, le composé réactif étant choisi dans le groupe constitué par : les amines, les alcanolamines, les polyamines, les acides aminés, les sels alcalins d'acides aminés, les amides, les urées, les phosphates, les carbonates et les borates de métaux alcalins.

L'effluent gazeux peut être choisi dans le groupe constitué par le gaz naturel, le gaz de synthèse, les fumées de combustion, les gaz de raffinerie, les gaz obtenus en queue du procédé Claus, les gaz de fermentation de biomasse.

La séparation permet d'optimiser les opérations réalisées sur la solution absorbante régénérées. D'une part, la séparation de la solution absorbante régénérée en deux fractions permet d'effectuer la vaporisation par le rebouilleur d'une fraction de la solution absorbante, contenant de préférence une concentration en composés réactifs réduite par rapport à la solution absorbante, limitant ainsi leur dégradation. La séparation permet, de plus, de réduire la quantité de solution à traiter afin d'éliminer les sels non régénérables et, donc, de réduire les coûts associés à l'élimination des sels non régénérables. La séparation permet enfin d'éliminer les produits de dégradations en réalisant une purification spécifique et appropriée pour chacune des fractions.

D'autres caractéristiques et avantages de l'invention seront mieux compris et apparaîtront clairement à la lecture de la description faite ci-après en se référant aux dessins parmi lesquels :
- la figure 1 présente un premier mode de réalisation du procédé selon l'invention,
- la figure 1b représente la courbe d'évolution de la température critique de démixtion en fonction de la composition de la solution absorbante,
- la figure 2 schématise une variante du premier mode de réalisation de l'invention,
- les figures 3 et 4 représentent d'autres modes de réalisation du procédé selon l'invention.

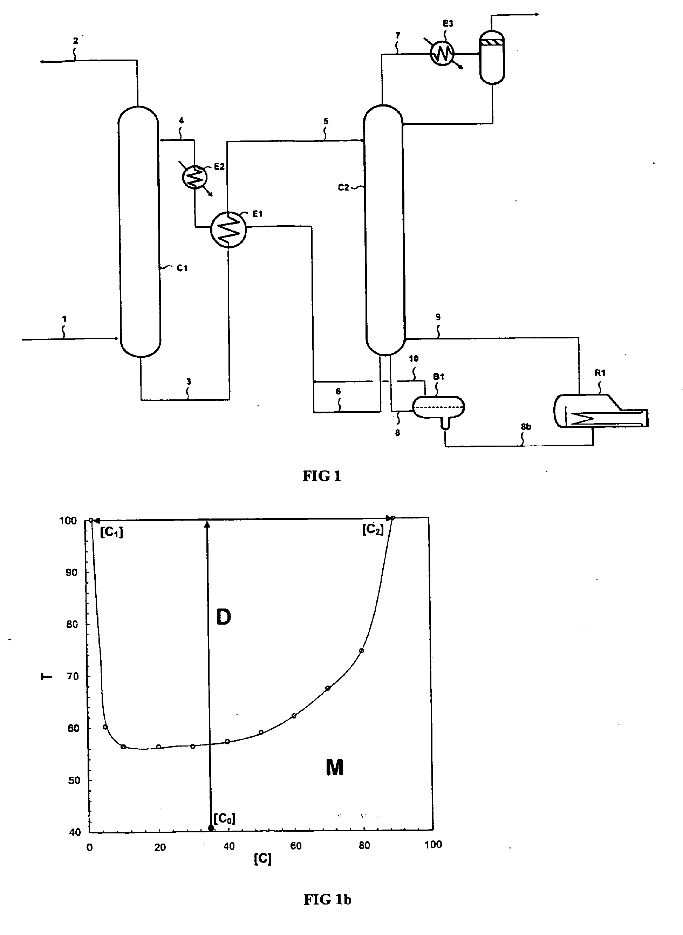

En référence à la figure 1, l'effluent gazeux à désacidifier circulant dans le conduit 1 est mis en contact dans la colonne d'absorption C1 avec la solution absorbante arrivant par le conduit 4. La colonne C1 est équipée d'internes de mise en contact gaz/liquide, par exemple des plateaux de distillation, un garnissage structuré ou disposé en vrac.

Le procédé de désacidification selon l'invention peut être appliqué à différents effluents gazeux. Par exemple, le procédé permet de décarbonater des fumées de combustion, de désacidifier du gaz naturel ou un gaz obtenu en queue du procédé Claus. Le procédé permet également de retirer les composés acides contenus dans les gaz de synthèse, dans les gaz de conversion dans les centrales intégrées de combustion du charbon ou du gaz naturel, et dans les gaz issus de la fermentation de biomasse.

Dans la colonne C1, les composés réactifs de la solution absorbante réagissent avec les composés acides de façon à former un sel soluble dans la solution. Le gaz appauvri en composés acides est évacué de C1 par le conduit 2. La solution absorbante enrichie en composés acides, sous forme de sels dissous dans l'eau, est évacuée de C1 par le conduit 3.

La solution absorbante est une solution aqueuse comportant un ou plusieurs composés réactifs et/ou présentant une affinité physico-chimique avec les composés acides. On choisit une solution absorbante qui comporte des composés qui réagissent de manière réversible avec les composés acides, tels que l'H₂S et le CO₂. Selon l'invention, on choisit des composés réactifs présentant une affinité physico-chimique avec les composés acides qui présentent la propriété de former deux phases liquides séparables lorsque la température est supérieure à une température critique. En d'autres termes, on choisit les composés réactifs de telle sorte que la solution absorbante forme deux phases liquides lorsque sa température dépasse une température critique de démixtion, c'est-à-dire un seuil de température. La composition de la solution absorbante mise en oeuvre dans le procédé selon l'invention est détaillée ci-après.

Ensuite, la solution absorbante est envoyée dans l'échangeur de chaleur E1. Elle ressort à une température plus élevée par le conduit 5.

La solution absorbante issue de E1 est introduite par le conduit 5 dans la colonne C2 pour être régénérée par distillation ou entraînement des composés acides par la vapeur, opération couramment nommée "strippage". La colonne C2 est équipée d'un rebouilleur R1 et d'internes de mise en contact gaz/liquide. Dans C2, la solution absorbante est mise en contact avec de la vapeur d'eau qui est générée par le rebouilleur R1 et introduite en fond de C2. Dans C2, sous l'effet de la mise en contact avec la vapeur d'eau, les composés acides sont séparés des composés réactifs de la solution absorbante. Les composés acides sont libérés sous forme gazeuse et évacués de C2 par le conduit 7. Le flux 7 de vapeur d'eau riche en composés acides est partiellement condensé par refroidissement dans E3 et les condensats sont renvoyés en tête de C2 à titre de reflux.

Une partie de la solution absorbante régénérée recueillie en fond de C2 est évacuée par le conduit 6 pour être réintroduite dans la colonne C1. La chaleur libérée par le refroidissement de la solution absorbante récupérée en fond de la colonne C2 peut être récupérée pour chauffer différents flux devant être régénérés. Par exemple, en référence à la figure 1, la solution absorbante circulant dans le conduit 6 permet de réchauffer, dans l'échangeur de chaleur E1, la solution absorbante chargée en composés acides circulant par le conduit 3. Ensuite, cette solution est refroidie par l'échangeur E2 à la température de fonctionnement de la colonne C1, puis elle est introduite dans C1 par le conduit 4.

Selon l'invention, une autre partie de la solution absorbante est prélevée en fond de la colonne C2 par le conduit 8 pour être introduite dans le ballon de séparation B1. La solution absorbante est à une température supérieure à la température critique pour laquelle la solution absorbante se sépare en deux fractions : une fraction riche en composés réactifs et une fraction riche en eau. Dans le dispositif B1, la solution absorbante peut être séparée par décantation, centrifugation ou filtration. B1 permet de séparer la fraction riche en eau de la fraction riche en composés réactifs. L'opération de séparation dans B1 peut éventuellement être effectuée à une pression différente de la pression dans C2 pour faciliter ladite étape de séparation. La figure 1b illustre le phénomène de démixtion.

La figure 1b montre un exemple d'évolution de la température critique T de démixtion en fonction de la concentration [C] en composé réactif TMHDA (N,N,N',N'-Tétraméthylhexane-1,6-diamine) pour une solution absorbante constituée de TMHDA en solution aqueuse, n'ayant pas absorbé de composés acides. Le domaine M indique les conditions de température et de concentration pour lesquelles la solution absorbante est monophasique. Le domaine D indique les conditions de température et de concentration pour lesquelles la solution absorbante est diphasique. A haute température, la solution absorbante de concentration globale [C₀] en composés réactifs est diphasique (zone D) et se sépare en deux phases, l'une pauvre en composés réactifs (concentration [C₁] en composés réactifs), l'autre riche en composés réactifs (concentration [C₂] en composés réactifs).

Selon l'invention, la fraction riche en eau est évacuée de B1 par le conduit 8b pour être introduite dans le rebouilleur R1 afin d'être intégralement ou partiellement vaporisée. La vaporisation dans R1 est effectuée par chauffage. Le flux intégralement ou partiellement vaporisé produit par R1 est envoyé par le conduit 9 en fond de la colonne C2 pour effectuer la régénération thermique de la solution absorbante.

Le fait d'envoyer uniquement la fraction riche en eau 8b à l'opération de rebouillage dans R1 permet de réduire la dégradation des composés réactifs dans la zone chaude du rebouilleur R1.

La deuxième fraction liquide enrichie en composés réactifs est évacuée de B1 par le conduit 10, pour être mélangée au flux de solution absorbante circulant dans le conduit 6.

La nature des composés réactifs de la solution absorbante peut être choisie en fonction de la nature du ou des composés acides à traiter pour permettre une réaction chimique réversible avec le ou les composés acides à traiter.

Les composés réactifs peuvent être par exemple et de façon non limitative des amines (primaires, secondaires, tertiaires, cycliques ou non, aromatiques ou non, saturées ou non), des alcanolamines, des polyamines, des acides aminés, des sels alcalins d'acides aminés, des amides, des urées, des phosphates, des carbonates ou des borates de métaux alcalins.

Par exemple, on peut utiliser le composé réactif suivant : N,N,N',N'-Tétraméthylhexane-1,6-diamine, couramment nommé TMHDA.

Les composés réactifs peuvent être en concentration variable par exemple comprise entre 10% et 90% poids, de préférence entre 15% et 60% poids, de manière très préférée entre 20% et 50% poids, dans la solution aqueuse.

La solution absorbante peut contenir entre 10% et 90% poids d'eau.

Dans un mode de réalisation, les composés réactifs de la solution absorbante peuvent être mélangés avec une autre amine, contenant au moins une fonction amine primaire ou secondaire afin de jouer un rôle d'activateur. La solution absorbante peut contenir de l'activateur jusqu'à une concentration de 20% poids, de préférence inférieure à 15% poids, de préférence inférieure à 10% poids.

Ce type de formulation est particulièrement intéressant dans le cas du captage du CO₂ dans les fumées industrielles, ou le traitement du gaz naturel contenant du CO₂ au dessus de la spécification désirée. En effet, pour ce type d'applications, on cherche à augmenter la cinétique de captage du CO₂, afin de réduire la taille des équipements.

Une liste non exhaustive de composés pouvant être utilisés comme activateurs est donnée ci-dessous :
- MonoEthanolAmine,
- AminoEthylEthanolAmine,
- DiGlycolAmine,
- Pipérazine,
- N-(2-HydroxyEthyl)Pipérazine,
- N-(2-AminoEthyl)Pipérazine,
- N-MethylPipérazine,
- N-EthylPipérazine,
- N-PropylPipérazine,
- 1,6-HexaneDiAmine,
- 1,1,9,9-TetraMéthylDiPropylèneTriamine,
- Morpholine,
- Pipéridine,
- 3-(MetylAmino)PropylAmine,
- N-MethylBenzylAmine.

Dans un mode de réalisation, la solution absorbante, en particulier une solution absorbante à base de N,N,N',N'-tetramethylhexane-1,6-diamine, peut aussi contenir d'autres composés organiques. Ainsi, la solution absorbante selon l'invention peut contenir des composés organiques non réactif vis-à-vis des composés acides (couramment nommé "solvant physique"), et qui permettent d'augmenter la solubilité d'au moins un ou plusieurs composés acides de l'effluent gazeux. Par exemple la solution absorbante peut comporter entre 5% et 50% poids de solvant physique tel que des alcools, des ethers de glycol, des lactames, des pyrrolidones N-alkylées, des pipéridones N-alkylées, des cyclotétraméthylènesulfone, des N-alkylformamides, des N-alkylacétamides, des ethers-cétones ou des phosphates d'alkyles et leurs dérivés. A titre d'exemple et de façon non limitative, il peut s'agir du méthanol, du tetraethylèneglycoldimethylether, du sulfolane ou de la N-formyl morpholine.

Dans un mode de réalisation, la solution absorbante, en particulier une solution absorbante à base de N,N,N',N'-tetramethylhexane-1,6-diamine, peut aussi comprendre un acide organique ou inorganique. Une liste non exhaustive de composés acides pouvant être utilisés à cet effet est donnée ci-dessous :
- acide formique
- acide oxalique
- acide acétique
- acide propanoique
- acide butanoique
- acide aminé (Glycine, Taurine, etc.)
- acide phosphorique
- acide phosphoreux
- acide pyrophosphorique
- acide sulfurique
- acide sulfureux
- acide nitreux
- acide chlorhydrique.

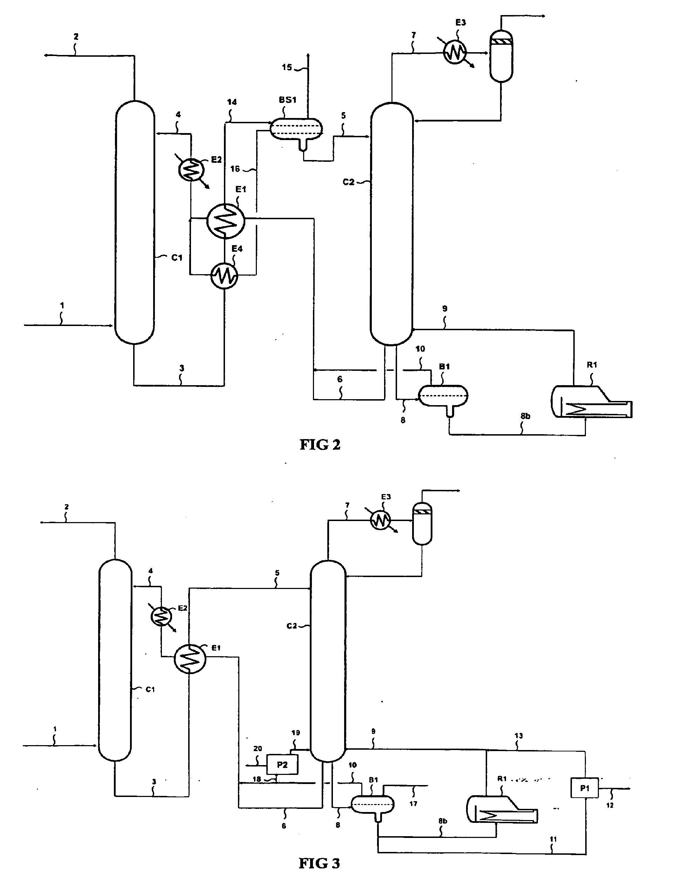

Le procédé schématisé par la figure 1 peut être complété en effectuant une étape de séparation de la solution absorbante en amont de la colonne C2, comme représenté par la figure 2. Les références de la figure 2 identiques à celles de la figure 1 désignent les mêmes éléments.

En référence à la figure 2, la solution absorbante chargée en composés acides obtenue en fond de C1 est réchauffée dans E4 et E1. Elle ressort de E1 par le conduit 14 à une température plus élevée. Dans l'échangeur E1, la solution absorbante chargée en composés acides est chauffée au delà de la température critique à laquelle la solution chargée en composés acides forme deux phases liquides séparables. Par exemple, la solution absorbante chargée en composés acides est chauffée à une température comprise entre 50°C et 150°C, de préférence entre 70°C et 120°C. Ainsi, le fluide circulant dans le conduit 14 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 14 sont séparées dans le ballon de séparation BS1. Par exemple, les deux phases liquides sont séparées dans BS1 par décantation, centrifugation ou filtration. La fraction gazeuse issue en tête de BS1 est extraite par le conduit 15 et peut éventuellement être mélangée au flux 7. La première fraction liquide enrichie en composés acides, c'est-à-dire enrichie en composés actifs ayant réagi avec les composés acides, est envoyée par le conduit 5 dans la colonne de régénération C2. La seconde fraction liquide appauvrie en composés acides, c'est-à-dire enrichie en composés actifs n'ayant pas réagi, est évacuée de BS1 par le conduit 16 et refroidie dans E4. En référence à la figure 2, la fraction liquide 16 est introduite dans la colonne C1, en étant mélangée avec la portion de solution absorbante circulant dans le conduit 4.

Le procédé de la figure 1 peut être complété par des opérations de purification réalisées dans des unités P1 et P2. Les références de la figure 3 identiques à celles de la figure 1 désignent les mêmes éléments.

La fraction riche en eau de la solution absorbante issue de B1 par le conduit 8b peut également être introduite par le conduit 11 dans l'unité de purification P1, afin de réaliser la purification spécifique de la fraction appauvrie en composés réactifs. Différentes techniques de purification peuvent être mises en oeuvre dans l'unité P1.

Le procédé de purification mis en oeuvre dans l'unité P1 peut par exemple être une élimination par adsorption des produits de dégradation organiques solubles dans la phase aqueuse, par exemple dans une colonne remplie d'un charbon actif. Dans ce mode de réalisation, on réalise une purification qui ne serait pas efficace si la totalité de la solution absorbante était introduite dans l'unité de purification. En effet, l'adsorption des composés réactifs, en plus grande concentration que les produits de dégradation, serait privilégiée.

Le procédé de purification dans l'unité P1 peut par exemple être une technique d'échange d'ions pour éliminer les sels non régénérables, par exemple dans une colonne remplie d'une résine échangeuse d'anions. Les sels non régénérables sont transformés par échange d'ions en hydrogénocarbonates qui sont régénérables. Dans ce mode de réalisation, on réduit le débit de solvant à traiter, réduisant ainsi la taille des équipements et les coûts opératoires associés. En effet, les sels non régénérables se concentrent dans la fraction riche en eau, ce qui permet de ne traiter qu'une fraction réduite de la solution absorbante, lors de cette étape de purification.

Le procédé de purification P1 peut également être une colonne à distiller pour éliminer les sels non régénérables et les produits de dégradations peu volatils et solubles dans la phase riche en eau. Un ajout d'une base forte par le flux 17, par exemple de la soude ou de la potasse, peut éventuellement être réalisé afin de neutraliser les sels d'amine. Dans ce mode de réalisation, on limite les réactions de dégradations thermique des composés réactifs qui sont en faible concentration dans la fraction riche en eau. Par ailleurs, la faible concentration en composés réactifs permet également de s'affranchir de réaliser une distillation sous vide, généralement utilisée pour réaliser la purification à basse température. Enfin, on réduit le débit de solvant à traiter, réduisant ainsi la taille des équipements.

La fraction riche en eau purifiée dans P1 est réintroduite dans C2 par le conduit 13 puis 9, tandis que les produits séparés sont évacués du procédé par le conduit 12. Alternativement, la fraction riche en eau purifiée au sein de P1 peut éventuellement être mélangée au flux circulant dans le conduit 4 pour être introduit dans C1 dans le cas où l'opération de purification dans P1 est réalisée à basse température.

La fraction riche en composés réactifs de la solution absorbante issue de B1 par le conduit 10 peut être introduite intégralement ou en partie par le flux 18 dans une unité de purification P2, afin de réaliser la purification spécifique de la fraction enrichie en composés réactifs. Différentes techniques de purification peuvent être mises en oeuvre dans l'unité P2.

Le procédé de purification P2 peut par exemple être une élimination par adsorption des produits de dégradation organiques solubles dans la phase riche en composés réactifs, par exemple par passage du flux 18 dans une colonne remplie d'un charbon actif, d'une zéolithe, d'une alumine activée ou non, de terres (par exemple : des argiles), d'une silice, etc.. Dans ce mode de réalisation, on réalise une purification qui ne serait pas efficace si la totalité de la solution absorbante était introduite dans l'unité de purification. Dans le cas d'une zéolithe, par exemple, l'adsorption des molécules d'eau, plus polaires et en plus grande concentration que les produits de dégradation, serait privilégiée. La fraction riche en composés réactifs ainsi purifiée est réintroduite dans C2 par le conduit 19.

Alternativement, l'unité de purification P2 peut par exemple être une colonne à distiller des composés réactifs. Suivant la volatilité des composés réactifs, cette distillation peut s'effectuer sous vide ou à pression atmosphérique. La coupe de distillation correspondant aux composés réactifs est réintroduite dans C2 par le conduit 19, tandis que les produits plus volatils et moins volatils sont évacués du procédé par le conduit 20.

Dans le procédé schématisé par la figure 3 on peut opérer l'unité P1 sans opérer l'unité P2, ou opérer l'unité P2 sans opérer l'unité P1 ou opérer simultanément les unités P1 et P2.

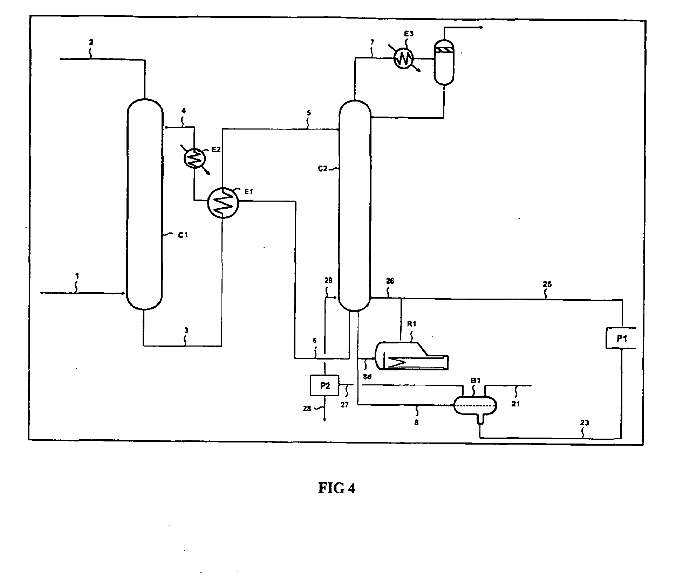

Une variante de l'invention est décrite en référence à la figure 4. Les références de la figure 4 identiques à celles de la figure 3 désignent les mêmes éléments. Dans le procédé de la figure 4, le fonctionnement des colonnes C1 et C2 est similaire à celui de la figure 3. Par contre la variante du procédé de la figure 4 est située au niveau du rebouilleur de la colonne C2 et des unités de purification P1 et P2.

Une portion de la solution absorbante évacuée en fond de C2 par le conduit 8 est introduite dans le dispositif de séparation B1. Une autre portion de la solution absorbante évacuée en fond de C2 par le conduit 8d est chauffée dans le rebouilleur R1 pour réaliser la régénération de la solution absorbante. Le flux vaporisé dans R1 est introduit dans C2 par le conduit 26. Suite à la régénération thermique dans C2, la solution absorbante est à une température supérieure à la température critique pour laquelle la solution absorbante se sépare en deux fractions : une fraction riche en composés réactifs et une fraction riche en eau.

Les sels non régénérables se concentrent dans la fraction riche en eau. Par ailleurs, l'injection d'une base forte par le flux 21, par exemple de la soude ou de la potasse, permet de libérer et de séparer dans B1 la fraction de composés réactifs piégés dans la phase riche en eau sous forme de sels. La fraction aqueuse contenant les sels neutralisés dans B1 sont envoyés à l'unité de purification P1 par le conduit 23. Les techniques de purifications mises en oeuvre dans l'unité P1 de la figure 4 sont identiques à celles décrites en référence à l'unité P1 de la figure 3. En référence à la figure 4, le flux purifié dans P1 est envoyé par le conduit 25, puis 26 en fond de la colonne C2 et les sels non régénérables ou autres produits de dégradation sont évacués de P1 par le conduit 24. Alternativement, le flux purifié dans P1 peut être introduit par le conduit 25 dans la colonne C1.

La fraction riche en composés réactifs est envoyée par le flux 27 vers l'unité de purification P2. Les techniques de purification mises en oeuvre dans l'unité P2 de la figure 4 sont identiques à celles décrites en référence à l'unité P2 de la figure 3. En référence à la figure 4, la fraction riche en composés réactifs purifiée retourne ensuite dans C2 par le conduit 29 et les produits de dégradation séparés sont évacués par le conduit 28. Alternativement, la fraction riche en composés réactifs purifiée évacuée de P2 par le conduit 29 peut être introduite dans C1.

Dans le procédé décrit en référence à la figure 4, les unités P1 et P2 peuvent être mises en oeuvre simultanément. Alternativement l'unité P1 peut être mise en oeuvre, alors que l'unité P2 est inactive. Dans ce cas le flux circulant dans le conduit 27 peut être directement injecté via le conduit 6 dans la colonne d'absorption C1. Alternativement, l'unité P2 peut être mise en oeuvre, tandis que l'unité P1 est inactive. Dans ce cas, le flux 23 peut être directement injecté dans le rebouilleur R1 ou dans le fond de la colonne C2, ou dans la colonne C1 via le conduit 6.

L'opération de séparation dans B1 peut éventuellement être effectuée à une pression différente de la pression dans C2 pour faciliter ladite étape de séparation.

Les procédés schématisés par les figures 3 et 4 peuvent être complétées en effectuant une étape de séparation de la solution absorbante en amont de la colonne C2, comme cela a été représenté dans le ballon BS1 par la figure 2.

Le procédé et ses avantages selon la présente invention sont illustrés par l'exemple de fonctionnement présenté ci-dessous.

L'exemple proposé se réfère au procédé décrit en référence à la figure 4, mettant en oeuvre une solution aqueuse de TMHDA à 50% poids. On se place dans l'otique de l'élimination des sels non régénérables qui se forment dans une unité de captage du CO₂. Ces derniers sont essentiellement des ions formiates, et en bien moindre quantité des ions glycolates, des ions oxalates, des ions acétates ou des ions propionates d'amine protonée. Nous ne considérons par la suite uniquement les ions formiates. Dans le cas où la concentration de formiates d'amine protonée en solution atteindrait 1,5% poids, une opération de purification serait hypothétiquement nécessaire pour limiter les problèmes de moussage ou de corrosion. En fond de la colonne C2, la solution absorbante est diphasique car sa température est au dessus de sa température critique. Les deux fractions peuvent ainsi être séparées dans le décanteur B1. La composition des deux factions est donnée dans le tableau ci-dessous, dans le cas où la température du décanteur B1 est d'environ 90°C.

| | fraction riche en composés réactifs | fraction riche en eau |
|---|---|---|
| TMHDA libre | 87,6 %pds. | 1 %pds. |
| eau | 12,4 %pds. | 95,7 %pds. |
| formiate d'amine protonnée | 0 %pds. | 3,3 %pds. |
| formiate de sodium | 0 %pds. | 0 %pds. |

Dans le dispositif de séparation B1, de la soude peut être introduite par le flux 21 afin d'échanger l'amine protonée par des cations sodium, par exemple. Après ajout de soude à hauteur d'un équivalent par rapport aux ions formiate, la composition des deux phases est donnée dans le tableau ci-dessous, dans le cas où la température du décanteur B1 est d'environ 90°C.

| | phase riche en composés réactifs | phase riche en eau |
|---|---|---|
| TMHDA libre | 87,8 %pds. | 1 %pds. |
| eau | 12,2 %pds. | 97,3 %pds. |
| formiate d'amine protonnée | 0 %pds. | 0 %pds. |
| formiate de sodium | 0 %pds. | 1,7 %pds. |

La phase riche en eau représente environ 45 %pds. de la solution absorbante, alors que la phase riche en composés réactifs représente environ 55 %pds de la solution absorbante. Cette dernière ne comportant pas d'ions formiate, elle peut être envoyée par le conduit 27 pour une éventuelle purification, puis par le conduit 29 au fond de la colonne d'absorption C2. La phase riche en eau contenant les ions formiate de sodium peut être envoyée à l'unité de distillation par le flux 23. Compte tenu de la séparation liquide-liquide réalisée en amont dans B1, l'équipement de distillation est environ deux fois plus petit, comparé au cas de référence où la totalité de la solution absorbante serait envoyée à la distillation. Par ailleurs, le débit de solution qui doit être vaporisé a été divisé par deux, ce qui réduit la consommation énergétique associée à cette étape de purification. De plus, la solution qui doit être vaporisée ne contient que très peu d'amine : il n'est donc pas nécessaire de réaliser une distillation sous vide, qui aurait été nécessaire si la totalité de la solution absorbante avait été envoyée à la distillation (l'amine représenterait 50% pds de la solution avec une température normale d'ébullition de 210°C). Enfin, la dégradation de l'amine dans cette étape de purification est limitée compte tenu de la faible concentration d'amine (1% poids d'amine) dans la phase aqueuse qui est distillée.

## Revendications

1. Procédé de désacidification d'un effluent gazeux comportant au moins un composé acide du groupe constitué par l'hydrogène sulfuré et le dioxyde de carbone, dans lequel on effectue les étapes suivantes :
a) on met en contact l'effluent gazeux (1) avec une solution absorbante (4) dans une zone de contact (C1) de manière à obtenir un effluent gazeux appauvri en composés acides (2) et une solution absorbante chargée en composés acides (3), la solution absorbante comportant au moins un composé réactif en solution aqueuse, la solution absorbante étant choisie pour sa propriété de former deux fractions liquides séparables lorsqu'elle est chauffée,
b) on régénère la solution absorbante chargée en composés acides dans une zone de régénération (C2) de manière à libérer les composés acides sous forme gazeuse (7) et à obtenir une solution absorbante régénérée (8),
c) on effectue dans un ballon de séparation (B1) une étape de séparation d'une portion de la solution régénérée en une fraction enrichie en eau et une fraction enrichie en composés réactifs, puis on évacue dudit ballon (B1) séparément la fraction enrichie en eau de la fraction enrichie en composés réactifs, puis
d) on effectue au moins l'une des opérations suivantes :
i) on vaporise (R1) au moyen d'un rebouilleur (R1) au moins une partie de la fraction enrichie en eau pour produire une vapeur qui est introduite dans la zone de régénération (C2),
ii) on effectue une opération de purification (P1) de la fraction enrichie en eau pour produire une fraction purifiée qui est introduite dans la zone de régénération (C2),
iii) on effectue une opération de purification (P2) de la fraction enrichie en composés réactifs pour produire une fraction purifiée qui est introduite dans la zone de régénération (C2).

2. Procédé selon la revendication 1, à l'opération ii) on met en oeuvre l'une des techniques suivantes : adsorption, échange d'ion, distillation.

3. Procédé selon l'une des revendications 1 et 2, à l'opération iii) on met en oeuvre l'une des techniques suivantes : adsorption, distillation.

4. Procédé selon l'une des revendications 1 à 3, dans lequel avant l'étape b), on chauffe la solution absorbante chargée en composés acides, on sépare (BS1) de la solution absorbante un flux appauvri en composés acides et on recycle le flux en l'introduisant dans la zone de mise en contact (C1).

5. Procédé selon la revendication 4, dans lequel, la solution absorbante chargée en composés acides est chauffée à une température comprise entre 50°C et 150°C.

6. Procédé selon l'une des revendications précédentes, dans lequel une deuxième portion de la solution absorbante régénérée est recyclée en étant introduite dans la zone de mise en contact.

7. Procédé selon l'une des revendications précédentes, dans lequel, à l'étape c) on utilise l'une des techniques de séparation suivantes: décantation, centrifugation, filtration.

8. Procédé selon l'une des revendications précédentes, dans lequel le composé réactif étant choisi dans le groupe constitué par : les amines, les alcanolamines, les polyamines, les acides aminés, les sels alcalins d'acides aminés, les amides, les urées, les phosphates, les carbonates et les borates de métaux alcalins.

9. Procédé selon l'une des revendications précédentes, dans lequel l'effluent gazeux est choisi dans le groupe constitué par le gaz naturel, le gaz de synthèse, les fumées de combustion, les gaz de raffinerie, les gaz obtenus en queue du procédé Claus, les gaz de fermentation de biomasse.

## Patentansprüche

1. Verfahren zur Entsäuerung eines Abgasstroms, der mindestens eine saure Verbindung der Gruppe aufweist, die aus Schwefelwasserstoff und Kohlendioxid besteht, wobei die folgenden Schritte durchgeführt werden:
a) der Abgasstrom (1) wird in einem Kontaktbereich (C1) derart mit einer absorbierenden Lösung (4) in Kontakt gebracht, dass ein Abgasstrom (2), welcher an sauren Verbindungen abgereichert ist, und eine absorbierende Lösung (3), welche mit sauren Verbindungen beladen ist, erhalten werden, wobei die absorbierende Lösung mindestens eine reaktionsfähige Verbindung in wässriger Lösung aufweist, wobei die absorbierende Lösung hinsichtlich ihrer Eigenschaft ausgewählt ist, zwei trennbare flüssige Fraktionen zu bilden, wenn sie erhitzt wird,
b) die absorbierende Lösung, welche mit sauren Verbindungen beladen ist, wird in einem Regenerationsbereich (C2) derart regeneriert, dass die sauren Verbindungen gasförmig (7) freigesetzt werden und dass eine regenerierte absorbierende Lösung (8) erhalten wird,
c) in einem Trennvolumen (B1) wird ein Schritt des Auftrennens einer Teilmenge der regenerierten Lösung in eine Fraktion, welche an Wasser angereichert ist, und eine Fraktion, welche an reaktionsfähigen Verbindungen angereichert ist, durchgeführt, woraufhin die Fraktion, die an Wasser angereichert ist, getrennt von der Fraktion, die an reaktionsfähigen Verbindungen angereichert ist, dem Kolben (B1) entnommen wird, woraufhin
d) mindestens einer der folgenden Vorgänge durchgeführt wird:
i) mindestens ein Teil der Fraktion, welche an Wasser angereichert ist, wird mittels eines Erhitzers (R1) verdampft (R1), um einen Dampf zu erzeugen, der in den Regenerationsbereich (C2) eingeleitet wird,
ii) die Fraktion, welche an Wasser angereichert ist, wird einem Aufreinigungsvorgang (P1) unterzogen, um eine aufgereinigte Fraktion zu erzeugen, die in den Regenerationsbereich (C2) eingeleitet wird,
iii) die Fraktion, welche an reaktionsfähigen Verbindungen angereichert ist, wird einem Aufreinigungsvorgang (P2) unterzogen, um eine aufgereinigte Fraktion zu erzeugen, die in den Regenerationsbereich (C2) eingeleitet wird.

2. Verfahren nach Anspruch 1, wobei beim Vorgang ii) eine der folgenden Techniken zum Einsatz kommt: Adsorption, Ionenaustausch, Destillation.

3. Verfahren nach einem der Ansprüche 1 und 2, wobei beim Vorgang iii) eine der folgenden Techniken zum Einsatz kommt: Adsorption, Destillation.

4. Verfahren nach einem der Ansprüche 1 bis 3, wobei im Vorfeld des Schrittes b) die absorbierende Lösung, welche mit sauren Verbindungen beladen ist, erhitzt wird, und ein Stoffstrom, welcher an sauren Verbindungen abgereichert ist, von der absorbierenden Lösung abgetrennt (BS1) wird, und der Stoffstrom zurückgeführt wird, indem er in den Kontaktbereich (C1) eingeleitet wird.

5. Verfahren nach Anspruch 4, wobei die absorbierende Lösung, welche mit sauren Verbindungen beladen ist, auf eine Temperatur im Bereich von 50 °C bis 150 °C erhitzt wird.

6. Verfahren nach einem der vorhergehenden Ansprüche, wobei eine zweite Teilmenge der regenerierten absorbierenden Lösung zurückgeführt wird, indem sie in den Kontaktbereich eingeleitet wird.

7. Verfahren nach einem der vorhergehenden Ansprüche, wobei in Schritt c) eine der folgenden Trenntechniken zur Anwendung kommt: Dekantation, Zentrifugation, Filtration.

8. Verfahren nach einem der vorhergehenden Ansprüche, wobei die reaktionsfähige Verbindung aus der Gruppe ausgewählt ist, die aus Folgendem besteht: den Aminen, den Alkanolaminen, den Polyaminen, den Aminosäuren, den Alkalisalzen von Aminosäuren, den Amiden, den Harnstoffen, den Phosphaten, den Carbonaten und den Boraten von Alkalimetallen.

9. Verfahren nach einem der vorhergehenden Ansprüche, wobei der Abgasstrom aus der Gruppe ausgewählt ist, die aus Erdgas, Synthesegas, Verbrennungsrauchgasen, Raffineriegasen, Restgasen aus dem Claus-Verfahren, Gasen aus der Vergärung von Biomasse besteht.

## Claims

1. A method of deacidizing a gaseous effluent comprising at least one acid compound of the group made up of hydrogen sulfide and carbon dioxide, wherein the following stages are carried out:
a) contacting gaseous effluent (1) with an absorbent solution (4) in a contacting zone (C1) so as to obtain a gaseous effluent depleted in acid compounds (2) and an absorbent solution laden with acid compounds (3), the absorbent solution comprising at least one reactive compound in aqueous solution, the absorbent solution being selected for its property of forming two separable liquid fractions when it is heated,
b) regenerating the absorbent solution laden with acid compounds in a regeneration zone (C2) so as to release the acid compounds in gaseous form (7) and to obtain a regenerated absorbent solution (8),
c) carrying out, in a separation drum (B1), a stage of separation of a portion of the regenerated solution into a fraction enriched in water and a fraction enriched in reactive compounds, then discharging from said drum (B1) separately the fraction enriched in water and the fraction enriched in reactive compounds,
d) carrying out at least one of the following operations:
i) vaporizing by means of a reboiler (R1) at least part of the water-enriched fraction so as to produce a vapour that is fed into regeneration zone (C2),
ii) carrying out an operation of purification (P1) of the water-enriched fraction so as to produce a purified fraction that is fed into regeneration zone (C2),
iii) carrying out an operation of purification (P2) of the fraction enriched in reactive compounds so as to produce a purified fraction that is fed into regeneration zone (C2).

2. A method as claimed in claim 1, wherein one of the following techniques is implemented in operation ii): adsorption, ion exchange, distillation.

3. A method as claimed in any one of claims 1 and 2, wherein one of the following techniques is implemented in operation iii): adsorption, distillation.

4. A method as claimed in any one of claims 1 to 3 wherein, prior to stage b), the absorbent solution laden with acid compounds is heated, a stream depleted in acid compounds is separated (BS1) from the absorbent solution and the stream is recycled by feeding it into contacting zone (C1).

5. A method as claimed in claim 4, wherein the absorbent solution laden with acid compounds is heated to a temperature ranging between 50°C and 150°C.

6. A method as claimed in any one of the previous claims, wherein a second portion of the regenerated absorbent solution is recycled by being fed into the contacting zone.

7. A method as claimed in any one of the previous claims wherein, in stage c), one of the following separation techniques is used: decantation, centrifugation, filtration.

8. A method as claimed in any one of the previous claims, wherein the reactive compound is selected from the group consisting of: amines, alkanolamines, polyamines, amino-acids, amino-acid alkaline salts, amides, ureas, alkali metal phosphates, carbonates and borates.

9. A method as claimed in any one of the previous claims, wherein the gaseous effluent is selected from the group made up of natural gas, syngas, combustion fumes, refinery gas, Claus tail gas and biomass fermentation gas.
